# FASCICULE DE BREVET EUROPEEN

(11) **EP 0 874 437 B1**
(45) Date de publication et mention de la délivrance du brevet: **20.08.2003**
(21) Numéro de dépôt: 98400886.2
(22) Date de dépôt: 09.04.1998
(51) Int. Cl.: H02H 7/08, G05B 23/02, G05B 9/02, F16P 3/14

(54) **Circuit de démarrage d'une machine ou dispositif analogue et procédé destiné à commander un processus de démarrage d'une machine**
Schaltung zum Start einer Maschine oder dergleichen und Verfahren zur Steuerung eines Starts einer Maschine
Circuit for starting a machine or the like and method for controlling start-up of a machine

(30) Priorité: 11.04.1997 DE 19715013
(43) Date de publication de la demande: 28.10.1998
(73) Titulaire: Schneider Electric Industries SAS, 92500 Rueil-Malmaison (FR)
(72) Inventeur: Klees, Christoph, 51674 Wiehl (DE)

(56) Documents cités:
- DE-A- 2 515 505
- DE-C- 19 500 396
- DE-C- 19 513 191
- FR-A- 2 325 225
- FR-A- 2 346 889
- FR-A- 2 631 138
- US-A- 5 559 664

## Description

La présente invention concerne un circuit de démarrage d'une machine ou dispositif analogue protégé par un circuit de sécurité et/ou de surveillance, dans lequel le circuit de sécurité et/ou de surveillance contrôle en permanence plusieurs entrées de signaux et interrompt en cas de défaut l'alimentation en énergie de la machine ou dispositif analogue, comprenant au moins deux relais commandés et commutés par le circuit de sécurité et/ou de surveillance et un commutateur de démarrage. Par ailleurs, la présente invention concerne un procédé destiné à commander un processus de démarrage d'une machine ou dispositif analogue protégé par un circuit de sécurité et/ou de surveillance, dans lequel le circuit de sécurité et/ou de surveillance contrôle en permanence plusieurs entrées de signaux et interrompt en cas de défaut l'alimentation en énergie de la machine ou dispositif analogue, le circuit de sécurité et/ou de surveillance commandant et commutant au moins deux relais.

Des circuits de sécurité et/ou de surveillance de ce type, comprenant des barrages photoélectriques par réflexion et des filtres de polarisation, sont connus à partir de l'état de la technique. Ces circuits comportent deux capteurs, qui sont testés cycliquement avec une fréquence de 300 Hz. Si, au cours de la phase de test, le système détecte un obstacle dans l'un des deux trajets du faisceau ou un incident sur l'une des deux chaînes redondantes dans le dispositif électronique ou sur l'un des deux capteurs, dans ce cas deux relais de sécurité montés l'un derrière l'autre sont mis au repos. La surveillance de la totalité du système, y compris celle des relais, est assurée par une entrée de test externe. Après une mise au repos des relais, seule une opération manuelle peut remettre sous tension le circuit. Ainsi, l'opération manuelle de remise sous tension du circuit consiste à faire démarrer une machine ou dispositif analogue par l'intermédiaire d'un circuit de sécurité et/ou de surveillance.

Le document FR 2 346 889 divulgue un circuit de sécurité utilisant deux relais mis en série avec un interrupteur.

À partir de cet état de la technique, l'objet de la présente invention est de perfectionner un circuit selon le générique de la présente invention, de manière à réduire les coûts de fabrication et à assurer un fonctionnement plus efficace, permettant une surveillance totale du circuit de sécurité et/ou de surveillance, de même que des entrées de signaux et également du circuit de démarrage.

Cet objet est résolu par le fait que les relais sont démarrés l'un après l'autre, par le fait qu'un contact à rupture du premier relais est disposé en dérivation du premier relais et de l'interrupteur de démarrage, qu'en parallèle au deuxième relais, qui doit être démarré le premier, est disposé un condensateur dont la charge commande ce deuxième relais, le condensateur étant chargé dans une première phase par l'intermédiaire du deuxième relais et du contact à rupture du premier relais après fermeture de l'interrupteur de démarrage, et par le fait qu'au moins un transistor est monté en série avec le premier relais et en parallèle au deuxième relais, la base du transistor étant reliée au contact à rupture du premier relais via le deuxième relais.

D'autres modes de réalisation préférés de la présente invention se dégagent des caractéristiques des sous-revendications.

En ce qui concerne le procédé conforme à l'invention, l'objet sur lequel se base la présente invention est résolu par le fait que les relais sont commutés l'un après l'autre pendant le processus de démarrage.

Pour ce faire, le processus de démarrage se décompose en quatre phases, qui sont obligatoirement exécutées l'une après l'autre. Au cours de la première phase, un condensateur est chargé par l'intermédiaire des contacts de rupture des relais. À cette occasion, le courant de base du transistor traverse le relais à commuter en premier lieu. Le chargement du transistor est nécessaire pour pouvoir utiliser ledit relais. À la fin de la première phase, une pression sur la touche de démarrage active l'instruction de démarrage. Une pression sur la touche de démarrage commande la mise sous tension du relais à commuter en dernier lieu. Le courant traverse alors ledit relais et le transistor.

Au cours d'une troisième phase consécutive, qui commence avec la mise en position d'auto-entretien du relais cité en dernier, le courant traverse le relais cité en dernier et le transistor. Le contact de travail du relais cité en dernier commande à cet effet la base d'un autre transistor, et, de ce fait, le condensateur est déchargé par le relais actionné en premier lieu. À cette occasion, le condensateur fournit le courant de base supplémentaire pour le deuxième transistor. Enfin, le relais actionné en premier lieu est excité, de telle sorte que maintenant les deux relais sont en position d'auto-entretien.

Au cours de la dernière phase, le transistor cité en premier est fermé et le courant de maintien traverse les contacts de travail des relais. Cette phase commence dès que le relais actionné en premier lieu a été excité.

D'autres caractéristiques et avantages de la présente invention se dégagent de la description ci-après du dessin correspondant, lequel montre un mode de réalisation préféré d'un circuit de surveillance.

Le dessin montre :
figure 1 : le schéma d'un circuit de surveillance avec les conductions du courant au cours d'une première phase ;
figure 2 : le circuit de surveillance selon la figure 2 dans une deuxième phase ; et
figure 3 : un circuit formé par deux relais, connecté au circuit de surveillance des figures 1 et 2 et destiné à mettre sous tension une machine externe.

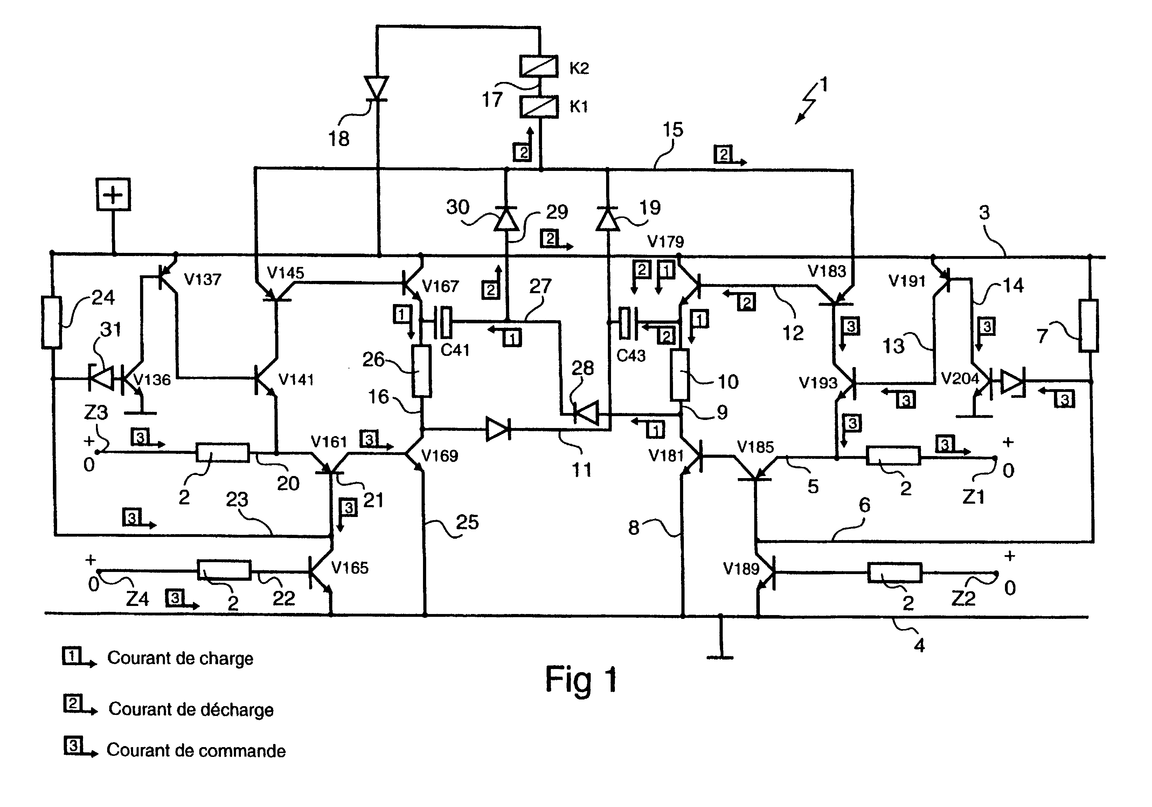

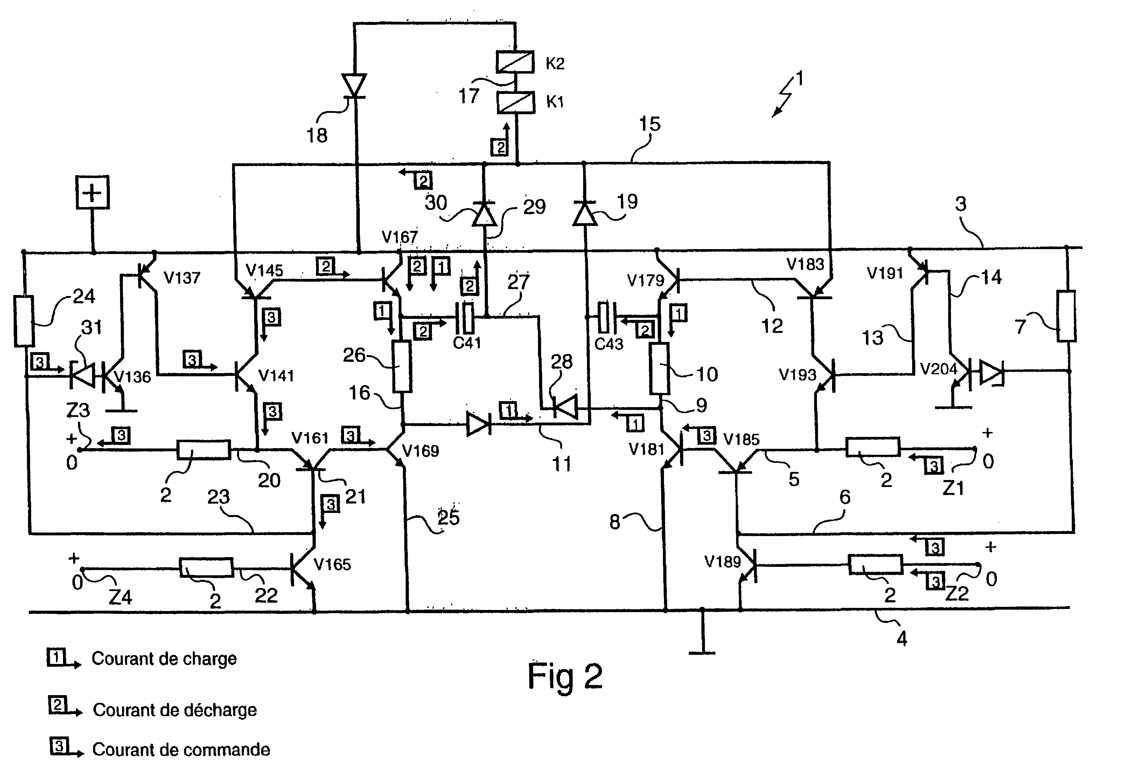

Les figures 1 et 2 montrent un circuit de surveillance 1. Le circuit de surveillance 1 comporte quatre entrées de signaux Z1, Z2, Z3 et Z4. Chaque entrée de signaux Z1, Z2, Z3 et Z4 est connectée à une résistance 2.

Par ailleurs, les figures 1 et 2 montrent une ligne d'énergie positive 3 et une ligne d'énergie négative 4.

L'entrée de signaux Z1 est reliée par l'intermédiaire d'une ligne 5 avec le côté émetteur d'un transistor V185. La base du transistor est reliée, d'une part, par l'intermédiaire d'une ligne 6 à la ligne d'énergie positive en passant par une résistance 7 et, d'autre part, au collecteur d'un transistor V189, lequel transistor V189 est relié par son émetteur à la ligne d'énergie négative 4 et par sa base à l'entrée de signaux Z2 en passant par une résistance 2.

Le transistor V185 communique par son collecteur avec la base d'un transistor V181, qui est relié par son émetteur à la ligne d'énergie négative 4, par l'intermédiaire d'une ligne 8, et est relié par son collecteur à une ligne 9. Une résistance 10 est montée dans la ligne 9, laquelle résistance est montée en parallèle avec un condensateur C43, le condensateur étant conçu comme un condensateur électrolytique polarisé, dont les plaquettes négatives sont reliées à la ligne 9 et les plaquettes positives à une ligne 11. Par ailleurs, un transistor V179 est relié par son émetteur à la ligne 9 et par son collecteur à la ligne d'énergie positive 3.

La base du transistor V179 est reliée au collecteur d'un transistor V183 par l'intermédiaire d'une ligne 12. Le transistor V183 est, pour sa part, relié par sa base avec un collecteur d'un transistor V193, dont l'émetteur est relié à la ligne 5 et dont la base est reliée par l'intermédiaire d'une ligne 13 au collecteur d'un transistor V191. Le transistor V191 est relié par son émetteur avec la ligne d'énergie négative 4 et par sa base avec le collecteur d'un transistor V204, par l'intermédiaire d'une ligne 14. La base de ce transistor V204 est reliée à la ligne 6 en passant par une diode de Zener.

Les transistors V189, V181, V179, V193 et V204 sont conçus comme des transistors NPN, alors que les transistors V191, V183 et V185 sont conçus comme des transistors PNP.

La ligne 11 fait communiquer une ligne 15 avec une ligne 16, qui sera encore décrite ci-après.

La ligne 15 communique avec l'émetteur du transistor V183 et avec l'émetteur d'un transistor V145. En outre, la ligne 15 est reliée à une ligne 17, dans laquelle sont montés en série deux relais K1 et K2 et qui par ailleurs est reliée à la ligne d'énergie positive 3. Une diode 18 est montée dans la ligne 17. Une autre diode 19 est montée dans la ligne 11.

Le côté droit du circuit de surveillance, ci-dessus décrit, est reproduit de manière analogue dans la partie gauche du circuit de surveillance 1 pour les entrées de signaux Z3 et Z4. L'entrée de signaux Z3 est reliée par l'intermédiaire d'une ligne 20, dans laquelle est montée la résistance 2, avec l'émetteur d'un transistor V161, lequel transistor V161 est relié par l'intermédiaire d'une ligne 21 avec le collecteur d'un transistor V165. À la base du transistor V165 est raccordée une ligne 22, qui relie la base du transistor V165 avec l'entrée de signaux Z4. Le transistor V165 est relié par son émetteur avec la ligne d'énergie négative 4.

Entre la base du transistor V161 et le collecteur du transistor V165, la ligne 21 communique avec une ligne 23, dans laquelle est montée une résistance 24 et qui est reliée à la ligne d'énergie positive 3.

Le collecteur du transistor V161 est relié avec la base d'un collecteur V169, dont l'émetteur est relié par l'intermédiaire d'une ligne 25 avec la ligne d'énergie négative 4 et dont le collecteur est monté en série avec une résistance 26 et un condensateur C41. Le condensateur C41 est, pour sa part, conçu comme un condensateur électrolytique polarisé, dont la plaquette positive est reliée par l'intermédiaire d'une ligne 27 avec la ligne 9, une diode 28 étant montée dans la ligne 27. La ligne 27 est en outre reliée à la ligne 15 par l'intermédiaire d'une ligne 29, dans laquelle est montée une diode 30.

Entre le condensateur C41 et la résistance 26, est monté l'émetteur d'un transistor V167, dont le collecteur est relié à la ligne d'énergie positive 3 et dont la base est reliée à l'émetteur du transistor V145, précédemment mentionné. Le transistor V145 est - comme il a déjà été mentionné - relié par son émetteur avec la ligne 15. La base du transistor V145 communique avec le collecteur d'un transistor V141, dont l'émetteur est relié à la ligne 20. La base du transistor V141 est reliée au collecteur d'un transistor V137 qui, pour sa part, est relié par son émetteur avec la ligne d'énergie positive 3. La base du transistor V137 communique avec le collecteur d'un transistor V136, dont la base est reliée à la ligne 23 en passant par une diode de Zener 31, la résistance 24 étant montée en série avec la diode 31.

La figure 1 montre une première phase du circuit de surveillance avec le courant de charge, le courant de décharge des relais et le courant de commande. Le courant de charge est repéré en outre par une flèche avec le chiffre 1, le courant de décharge des relais par une flèche avec le chiffre 2 et le courant de commande par une flèche avec le chiffre 3. Dans cette première phase, les entrées de signaux Z3 et Z4 captent un potentiel positif et les entrées de signaux Z1 et Z2 captent un potentiel nul. Le condensateur C43 est chargé et le condensateur C41 est déchargé.

Les transistors V161, V165 et V169 sont commandés directement par les potentiels captés aux entrées de signaux Z3 et Z4. Les courants de charge correspondants sont acheminés par les lignes 20, 21 et 22.

Les potentiels nuls des entrées de signaux Z1 et Z2 font en sorte que le transistor V204 soit conducteur. Ce transistor V204 permet d'acheminer le courant à la base du transistor V191, dont le collecteur commande également la base du transistor V193. Le transistor V193 est conducteur à la seule condition que l'entrée de signaux Z1 capte un potentiel nul. Dans ce cas, le courant de base du transistor V183, qui est fourni par le condensateur C43, traverse le transistor V193. Le courant de base du transistor V179 est acheminé par l'intermédiaire du trajet collecteur-émetteur du transistor V183.

Dans cette phase, les transistors V169 et V179 sont utilisés de telle sorte que le condensateur C43 envoie un courant de décharge dans les relais K1 et K2. La décharge est exécutée par l'intermédiaire du transistor V179, la décharge fournissant aussi le courant de base pour les transistors V179 et V183.

Le condensateur C41 est chargé par l'intermédiaire des transistors V179 et V169 en même temps que s'opère la décharge du condensateur C43. Le chargement du condensateur C41 résulte du potentiel capté aux entrées de signaux Z3 et Z4.

Dans la deuxième phase représentée dans la figure 2, qui alterne toutes les 2,3 ms avec la première phase représentée dans la figure 1, les transistors V181, V185 et V189 sont commandés directement, étant donné que dans le cas présent les entrées de signaux Z1 et Z2 présentent un potentiel et les entrées de signaux Z3 et Z4 présentent un potentiel nul. Les potentiels nuls des entrées de signaux Z3 et Z4 font en sorte que le transistor V136 soit conducteur. Ce transistor V136 permet d'acheminer le courant vers la base du transistor V137, dont le collecteur commande également la base du transistor V141. Le transistor V141 est conducteur à la seule condition que l'entrée de signaux Z3 capte un potentiel nul.

Le courant de base du transistor V145, qui est fourni par le condensateur C41, traverse le transistor V141. Le courant de base du transistor V167 est acheminé par l'intermédiaire du trajet collecteur-émetteur du transistor V145.

Dans cette phase, les transistors V167 et V181 sont utilisés. En outre, le condensateur C41 envoie un courant de décharge dans les relais K1 et K2 par l'intermédiaire du transistor V167. Par ailleurs, le condensateur C41 fournit le courant de base pour les transistors V167 et V145. Le condensateur C43 est chargé par l'intermédiaire des transistors V167 et V181 en même temps que s'opère la décharge du condensateur C41.

Les phases ci-dessus décrites se renouvellent toutes les 2,3 ms environ, de telle sorte que le circuit de surveillance exécute une surveillance permanente des entrées de signaux Z1, Z2, Z3 et Z4. Si, au cours de la surveillance, il s'avère qu'un potentiel ne présente ni la valeur adéquate, ni la polarité appropriée, le condensateur ne se déchargera pas, de telle sorte que ce condensateur ne pourra pas envoyer ensuite un courant de décharge dans les relais K1 et K2. Les relais K1 et K2 sont donc mis au repos, de telle sorte que la machine connectée avec lesdits relais constitue une source de danger et elle est immédiatement débranchée. La présence d'un défaut sur l'un des composants entraîne la fusion des transistors V167, V169, V179 et/ou V181, de telle sorte que la totalité de la commande est arrêtée, ce qui empêche également le chargement d'un condensateur ; par conséquent, pendant la phase suivante, ce condensateur ne pourra pas envoyer un courant de décharge dans les relais K1 et K2.

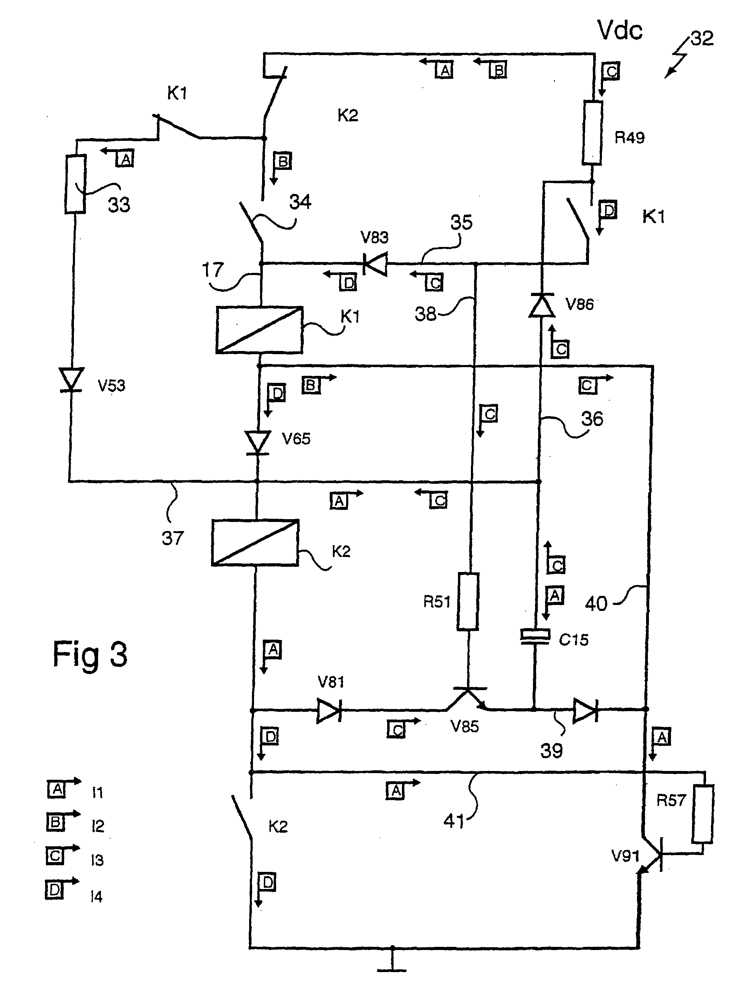

Pour activer initialement le circuit de surveillance 1 ci-dessus expliqué et représenté dans les figures 1 et 2, il est nécessaire d'exécuter un processus de démarrage, qui se déroule par l'intermédiaire d'un circuit 32, représenté dans la figure 3.

La figure 3 montre la ligne 17 dans laquelle sont montés les relais K1 et K2. Une diode V65 est montée en série entre les deux relais K1 et K2. Une résistance 33 et une diode V53 sont montées en parallèle par rapport au relais K1. Un contact de travail du relais K1 est monté en amont de la résistance 33. Par contre, le contact de travail du relais K2 est monté en série avec un commutateur 34 destiné à commander le démarrage externe. Le contact de rupture du relais K2 est monté dans la ligne 17, alors que le contact de rupture du relais K1 est monté dans une ligne 35 reliée à la ligne 17, laquelle ligne 35 est reliée par l'intermédiaire d'une résistance R49 au contact de travail du relais K2. Par ailleurs, une diode V83 est montée dans la ligne 35, le contact de rupture étant disposé entre la résistance R49 et la diode V83. Une diode V86 et un condensateur C15 sont montés dans une ligne 36 connectée entre la résistance R49 et le contact de rupture du relais K1. Entre le condensateur C15 et la diode V86, la ligne 36 est reliée à une ligne 37 qui, d'une part, est reliée à la ligne 17 et, d'autre part, est connectée à la résistance 33.

Parallèlement à la ligne 36 est montée une ligne 38 qui relie la ligne 35 avec un transistor V85, la ligne 38 étant reliée à la base du transistor V85. Par son collecteur, le transistor V85 est relié à la ligne 17 entre le relais K2 et le contact de rupture du relais K2, alors que l'émetteur du transistor V85 communique avec une ligne 39, qui communique elle-même avec la ligne 36, dans laquelle est monté le condensateur C15. La ligne 39 est en outre reliée par l'intermédiaire d'une ligne 40 avec la ligne 17, entre les deux relais K1 et K2.

Une ligne 41, dans laquelle est montée une résistance R57, est disposée parallèlement à la ligne 39. La ligne 41 relie la ligne 17 avec la base d'un transistor V91, dont le collecteur communique avec la ligne 40.

Le processus de démarrage externe se décompose en quatre phases, qui obligatoirement doivent être exécutées l'une après l'autre. Les quatre phases sont représentées dans la figure 3 par les courants i₁, i₂, i₃ et i₄, des flèches repérées par les capitales A à D étant attribuées aux courants iₙ.

Au cours de la première phase, le condensateur C15 est chargé par l'intermédiaire des contacts de rupture des deux relais K1 et K2. À cette occasion, le courant de base du transistor V91 traverse le relais K2. Le chargement du condensateur C15 est nécessaire pour pouvoir utiliser le relais K2. Au cours de la deuxième phase, le commutateur 34 est actionné de manière à mettre sous tension le relais K1. Le courant traverse alors le relais K1 et le transistor V91. Cette phase constitue l'instruction de démarrage.

Lorsque, après l'instruction de démarrage, le relais K1 est mis en position d'auto-entretien, le courant traverse la résistance R49, le relais K1 et le transistor V91. Le contact de travail du relais K1 commande à cet effet la base du transistor V85. De ce fait, le condensateur C15 est déchargé par le relais K2. Le condensateur C15 continue à alimenter le transistor V85 avec un courant de base supplémentaire. Au cours de cette troisième phase, le relais K1 est en position d'auto-entretien.

Au cours de la quatrième et dernière phase, le relais K2 est excité. Dès que le relais K2 a été excité, le transistor V91 est fermé et le courant de maintien traverse les contacts de travail des deux relais K1 et K2.

Dans ce circuit de démarrage 32, les relais K1 et K2 ne sont donc pas excités en même temps, mais l'un après l'autre. Comparé à l'état de la technique, ce type de démarrage est moins coûteux, plus efficace et assure une surveillance totale non seulement du circuit de démarrage 32, mais aussi de la machine montée en aval de ce circuit.

## Revendications

1. Circuit de démarrage d'une machine ou analogue sécurisée par un circuit de sécurité et/ou de surveillance, dans lequel le circuit de sécurité et/ou de surveillance (1) contrôle en permanence plusieurs entrées de signal (Z1,Z2,Z3,Z4) et interrompt en cas de défaut l'alimentation en énergie de la machine ou analogue, comprenant au moins deux relais (K1,K2) pilotés et commutés par le circuit (1), les deux relais étant montés en série avec un interrupteur de démarrage (34),
**caractérisé par le fait que** :
- les relais (K1,K2) sont démarrés l'un après l'autre,
- un contact à rupture du premier relais (K1) est disposé en dérivation du premier relais (K1) et de l'interrupteur (34),
- en parallèle au deuxième relais (K2), qui doit être démarré le premier, est disposé un condensateur (C15) dont la charge commande ce deuxième relais (K2), le condensateur (C15) étant chargé dans une première phase par l'intermédiaire du deuxième relais et du contact à rupture du premier relais (K1), et déchargé ensuite dans le deuxième relais (K2) après fermeture de l'interrupteur (34),
- au moins un transistor (V91) est monté en série avec les premier relais (K1) et en parallèle au deuxième relais (K2), la base du transistor étant reliée au contact à rupture du premier relais (K1) via le deuxième relais (K2).

2. Circuit de démarrage selon la revendication 1, **caractérisé par le fait que** le condensateur (C15) est un condensateur électrolytique polarisé, l'électrode positive du condensateur (C15) étant montée en série avec le contact à rupture du premier relais (K1)

3. Circuit de démarrage selon la revendication 1, **caractérisé par le fait que** le transistor (V91) est un transistor NPN.

4. Circuit de démarrage selon la revendication 1, **caractérisé par le fait qu'**en parallèle au deuxième relais (K2) est disposé le condensateur (C15) monté en série avec un transistor (V85) dont la base est commandée grâce à un contact de travail du premier relais (K1), pour que le condensateur (C15) se décharge en présence d'un courant de base, la décharge entraînant un courant de base supplémentaire pour le transistor (V85).

5. Procédé de commande du démarrage d'une machine ou analogue sécurisée par un circuit de sécurité et/ou de surveillance (1), lequel circuit surveille de manière permanente plusieurs entrées de signal (Z1,Z2,Z3,Z4) et interrompt en cas de défaut l'alimentation en énergie de la machine ou analogue, le circuit pilotant et commutant au moins deux relais (K1,K2), les relais (K1,K2) étant montés en série avec un interrupteur de démarrage (34), **caractérisé par le fait que**
- dans une première phase, un condensateur (C15) mis en série avec un transistor (V91) est chargé par l'intermédiaire du deuxième relais (K2) via un contact à rupture du premier relais (K1), la base du transistor étant polarisée via le deuxième relais,
- dans une deuxième phase, l'interrupteur de démarrage (34) est actionné pour mettre en tension le premier rèlais,
- dans une troisième phase, un contact à fermeture du premier relais commande la fermeture d'un circuit de décharge du condensateur (C15) dans le deuxième relais, tandis que le premier relais est mis en auto-entretien,
- dans une quatrième phase, le deuxième relais se ferme et se met en auto-entretien, tandis que le transistor (V91) est bloqué.

## Patentansprüche

1. Schaltung zum Start einer über eine Sicherheits- und/oder Überwachungsschaltung (1) abgesicherte Maschine od. dgl., bei welcher die Sicherheitsund/oder Überwachungsschaltung (1) mehrere Signaleingänge (Z1, Z2, Z3, Z4) konstant überwacht und beim Auftreten eines Fehlers die Energiezufuhr zur Maschine od. dgl. unterbricht, mit zumindest zwei Relais (K1, K2), die über die Sicherheits- und/oder Überwachungsschaltung (1) ansteuerbar und schaltbar sind, wobei die zwei Relais in Reihe mit einem Startschalter (34) geschaltet sind, **dadurch gekennzeichnet,**
**daß** die Relais (K1, K2) nacheinander gestartet werden, daß ein Öffnerkontakt des ersten Relais (K1) parallel zum ersten Relais (K1) und zum Startschalter (34) geschattet ist, daß parallel zu dem zuerst zu startenden zweiten Relais (K2) ein Kondensator (C15) angeordnet ist, dessen Ladung das zweite Relais (K2) durchsteuert, wobei der Kondensator (C15) während einer ersten Phase durch das zweite Relais und den Öffnerkontakt des ersten Relais (K1) geladen wird, und dann in das zweite Relais (K2) nach dem Schließen des Startschalters (34) entladen wird, daß zumindest ein Transistor (V91) mit dem ersten Relais (K1) in Reihe und parallel zum zweiten Relais (K2) geschaltet ist, wobei die Transistorbasis über das zweite Relais (K2) mit dem Öffnerkontakt des ersten Relais (K1) verbunden ist.

2. Schaltung nach Anspruch 1, **dadurch gekennzeichnet, daß** der Kondensator (C15) als gepolter Elektrolytkondensator ausgebildet ist, wobei die positive Platte des Kondensators (C15) in Reihe mit dem Öffnerkontakt des ersten Relais (K1) geschaltet ist.

3. Schaltung nach Anspruch 1, **dadurch gekennzeichnet, daß** der Transistor (V91) als NPN-Transistor ausgebildet ist.

4. Schaltung nach Anspruch 1, **dadurch gekennzeichnet daß** der Kondensator (C15) in Reihe mit einem Transistor (V85) parallel zum zweiten Relais (K2) geschaltet ist, wobei die Transistorbasis mit Hilfe eines Schließerkontaktes des ersten Relais (K1) so gesteuert wird, daß der Kondensator (C15) bei Anliegen eines Basisstroms entlädt und die Entladung einen zusätzlichen Basisstrom für den Transistor (V85) bereitstellt.

5. Verfahren zur Steuerung eines Starts einer mittels einer Sicherheits- und/oder Überwachungsschaltung (1) abgesicherten Maschine od. dgl., bei welchem die Sicherheits- und/oder Überwachungsschaltung (1) mehrere Signaleingänge (Z1, Z2, Z3, Z4) konstant überwacht und beim Auftreten eines Fehlers die Energiezufuhr zur Maschine od. dgl. unterbricht, wobei die Sicherheits- und/oder Überwachungsschaltung zumindest zwei Relais (K1, K2) ansteuert und schaltet, wobei die zwei Relais (K1, K2) in Reihe mit einem Startschalter (34) geschaltet sind, **dadurch gekennzeichnet, daß**
- in einer ersten Phase wird ein mit einem Transistor (V91) in Reihe geschalteter Kondensator (C15) über das zweite Relais (K2) und durch einen Öffnerkontakt des ersten Relais (K1) entladen,
- in einer zweiten Phase wird der Startschalter (34) betätigt, um das erste Relais mit Spannung zu versorgen,
- in einer dritten Phase steuert ein Schließerkontakt des ersten Relais das Schließen eines Entladekreises des Kondensators (C15) im zweiten Relais, wobei das erste Relais in Selbsthaltung gehalten wird,
- in einer vierten Phase wird das zweite Relais geschlossen und in Selbsthaltung gehalten, wobei der Transistor (V91) gesperrt ist.

## Claims

1. Circuit for starting a machine or the like protected by a protective and/or monitoring circuit, wherein the protective and/or monitoring circuit (1) constantly monitors several signal inputs (Z1, Z2, Z3, Z4) and cuts the power supply to the machine or the like if a failure occurs, with at least two relays (K1, K2) that can be controlled and switched by the circuit (1), the two relays being series-connected with a start-up switch (34),
**characterised in that**:
- the relays (K1,K2) are started one after the other,
- a break contact of the first relay (K1) is arranged parallel to the first relay (K1) and the switch (34),
- in parallel to the second relay (K2), which must be started first, there is arranged a capacitor (C15), the charge of which controls this second relay (K2), the capacitor (C15) being charged in a first phase via the second relay and the break contact of the first relay (K1) and then discharged in the second relay (K2) after the switch (34) is closed,
- at least one transistor (V91) is series-connected with the first relay (K1) and in parallel to the second relay (K2), the base of the transistor being connected to the break contact of the first relay (K1) via the second relay (K2).

2. Start-up circuit according to claim 1, **characterised in that** the capacitor (C15) is a polarised electrolyte capacitor, the positive electrode of the capacitor (C15) being series-connected with the break contact of the first relay (K1).

3. Start-up circuit according to claim 1, **characterised in that** the transistor (V91) is a NPN-transistor.

4. Start-up circuit according to claim 1, **characterised in that** the capacitor (C15) is arranged in parallel with the second relay (K2) and series-connected with a transistor (V85) whose base is controlled by virtue of a make-contact of the first relay (K1), so that the capacitor (C15) is discharged in the presence of a base current, the discharge involving a supplementary base current for the transistor (V85).

5. Method for controlling the start-up of a machine or the like protected by means of a protective and/or monitoring circuit (1), wherein the circuit (1) constantly monitors several signal inputs (Z1, Z2, Z3, Z4) and cuts the power supply to the machine or the like if a failure occurs, the circuit controlling and switching at least two relays (K1, K2), series-connected with a start-up switch (34),
**characterised in that**:
- in a first phase, a capacitor (C15) series-connected with a transistor (V91) is charged by the second relay (K2) via a break contact of the first relay (K1), the base of the transistor being polarized via the second relay,
- in a second phase, the start-up switch (34) is actuated in order to energize the first relay,
- in a third phase, a make-contact of the first relay controls the closing of a discharge circuit of the capacitor (C15) in the second relay, while the first relay is put in self-maintaining state,
- in a fourth phase, the second relay closes and is put in self-maintaining state, while the transistor (V91) is blocked.
